# EUROPÄISCHE PATENTSCHRIFT

(11) **EP 2 192 685 B1**
(45) Veröffentlichungstag und Bekanntmachung des Hinweises auf die Patenterteilung: **07.11.2018**
(21) Anmeldenummer: 09159620.5
(22) Anmeldetag: 07.05.2009
(51) Int. Cl.: H02P 23/20, H02P 1/28, H02P 23/14, H02P 3/18

(54) **VORRICHTUNG UND VERFAHREN ZUR AUTOPARAMETRIERUNG EINES ELEKTRONISCHEN MOTORSTEUERGERÄTES**
DEVICE AND METHOD FOR SETTING THE PARAMETERS OF AN ELECTRONIC MOTOR CONTROL DEVICE AUTOMATICALLY
DISPOSITIF ET PROCÉDÉ D'AUTOPARAMÉTRAGE D'UN APPAREIL DE COMMANDE DE MOTEUR ÉLECTRONIQUE

(43) Veröffentlichungstag der Anmeldung: 02.06.2010
(73) Patentinhaber: Siemens Aktiengesellschaft, 80333 München (DE)
(72) Erfinder: Seitz, Johann, 92224 Amberg (DE); Hertz, Dirk, 92260 Fichtenhof (DE); Zitzler, Stefan, 92421 Schwandorf (DE)

(56) Entgegenhaltungen:
- WO-A-2005/010630
- US-A- 5 583 412
- US-A1- 2004 135 534

## Beschreibung

Die Erfindung betrifft ein elektronisches Motorsteuergerät, welches dazu ausgebildet ist einen Asynchronmotor anzusteuern, sowie ein Verfahren zum Ansteuern eines Asynchronmotors.

Ein elektronisches Motorsteuergerät steuert insbesondere das Anlauf- und/oder Auslaufverhalten eines angeschlossenen Asynchronmotors. Ebenso kann ein elektronisches Motorsteuergerät beispielsweise einen Sanftanlauf, einen Sanftauslauf, einen Pumpenauslauf, ein Gleichstrombremsen oder einen Energiesparbetrieb bei Teillast eines Asynchronmotors steuern.

Das Anlauf- und Auslaufverhalten eines Asynchronmotors muss üblicherweise vom Anwender über eine Vielzahl von Parametern am elektronischen Motorsteuergerät eingestellt werden. Dieses Einstellen erfolgt beispielsweise mit Hilfe von Potentiometern, einem Display und Bedientasten am elektronischen Motorsteuergerät oder einer Parametriersoftware. Hierbei muss der Anwender mehrere Parameter am elektronischen Motorsteuergerät gezielt einstellen, um so sein erwünschtes Anlauf- bzw. Auslaufverhalten des Asynchronmotors zu erhalten. Derartige Parameter sind beispielsweise die Startspannung, die Rampenzeit, die Strombegrenzung, der Losbrechimpuls, das Bremsmoment, die Abschaltspannung, usw.. In der Regel ist der Anwender überfordert, die einzelnen Parameter auf Anhieb richtig zu deuten und somit das erwünschte Anlauf- und/oder Auslaufverhalten des Asynchronmotors einzustellen. Dies hat zur Folge, dass sich sein Antrieb bzw. seine Applikation meist nicht so verhält, wie er es erwartet hat. Des Weiteren werden die Parameter einmalig fest eingestellt. Kommt es nun zu einer Laständerungen am Asynchronmotor, so führt dies zu unterschiedlichen Anlauf- und/oder Auslaufverhalten des Asynchronmotors.

Aus der US 2004/0135534 A1 ist ein Motorkontrollverfahren bekannt, bei welchem automatisch die Charakteristik eines Motors erlernt und anhand aufgezeichneter Informationen über den Motor ein Motormodell des Motors erstellt wird.

Aus der WO 2005/010630 A1 ist ein Sanftstarter für einen Asynchronmotor bekannt. Durch einstellbare Drosseln des Sanftstarters kann für den Asynchronmotor eine Strombegrenzung gegenüber der an dem Sanftstarter anliegenden Versorgungsleitung herbeigeführt werden.

Der Erfindung liegt daher die Aufgabe zugrunde, ein elektronisches Motorsteuergerät hinsichtlich einer Anlauf- und/oder Auslaufphase eines Asynchronmotors zu verbessern.

Die Lösung der gestellten Aufgabe gelingt durch ein elektronisches Motorsteuergerät gemäß Anspruch 1.

Ferner wird die Aufgabe gelöst, durch ein Verfahren zum Ansteuern eines Asynchronmotors gemäß Anspruch 5.

Weitere vorteilhafte Ausführungsformen ergeben sich aus den Unteransprüchen.

Dadurch, dass die letzte erreichte Anlaufzeit und/oder Auslaufzeit erfasst wird, kann ein Abgleich hinsichtlich des erwünschten Anlaufzeitsollwertes und/oder des Auslaufzeitsollwertes stattfinden. Die Anlaufzeitdifferenz und/oder Auslaufzeitdifferenz kann gebildet werden. Ein Regler des elektronischen Motorsteuergeräts kann auf Basis dieser Informationen die Anlaufzeit und/oder die Auslaufzeit dahingehend regeln, dass der erwünschte Anlaufzeitsollwert und/oder Auslaufzeitsollwert erreicht wird. Das Regeln der An- und/oder Auslaufzeit und somit Erreichen des Anlaufzeitsollwertes und/oder Auslaufzeitsollwertes kann unter Umständen mehrere Anlauf- und/oder Auslaufphasen in Anspruch nehmen. Letztendlich wird jedoch durch das "Nachregeln" die erwünschte Anlaufzeit und/oder Auslaufzeit des Asynchronmotors erreicht.

Dies hat den Vorteil, dass das elektronische Motorsteuergerät sich automatisch derart einstellt bzw. regelt, dass die erwünschte Anlaufzeit und/oder Auslaufzeit des angeschlossenen Asynchronmotors erreicht wird. Ein erwünschtes Anlauf- und/oder Auslaufverhalten eines angeschlossenen Asynchronmotors kann gewährleistet werden. Kommt es jedoch nun beispielsweise zu Laständerungen oder Änderungen der Umgebungsvariablen (Temperatur, Abnutzung eines Antriebsriemens, etc.) ergeben sich bei einem herkömmlichen Motorsteuergerät unter Umständen völlig andere Anlauf- und Auslaufzeiten des angesteuerten Asynchronmotors. Hier wird ein weiterer Vorteil der vorliegenden Erfindung deutlich. Das elektronische Motorsteuergerät regelt automatisch den Anlauf und/oder Auslauf des Asynchronmotors derart nach, dass die entstandene Anlaufzeitdifferenz und/oder Auslaufzeitdifferenz minimiert und letztendlich aufgehoben wird. Stillstandszeiten können vermieden werden und der erwünschte Einsatz des elektronischen Motorsteuergerätes und insbesondere des Asynchronmotors kann sichergestellt werden.

In einer vorteilhaften Ausführungsform der Erfindung weist das elektronische Motorsteuergerät eine Mensch-Maschinenschnittstelle zur direkten Eingabe des Anlaufzeitsollwerts und/oder des Auslaufzeitsollwertes am elektronischen Motorsteuergerät auf.

Dadurch, dass über die Mensch-Maschinenschnittstelle lediglich der erwünschte Anlaufzeitsollwert und/oder Auslaufzeitsollwert eingegeben werden muss und das elektronische Motorsteuergerät sich automatisch derart einstellt bzw. regelt, dass der erwünschte Anlaufzeitsollwert und/oder Auslaufzeitsollwert des angeschlossenen Asynchronmotors erreicht wird, entfällt die für den Anwender mühselige Prozedur das Anlauf- und/oder Auslaufverhalten des Asynchronmotors über eine Vielzahl von Parametern am elektronischen Motorsteuergerät einzustellen. Der Anwender muss lediglich den erwünschten Anlaufzeitsollwert und/oder Auslaufzeitsollwert des Asynchronmotors am elektronischen Motorsteuergerät einstellen. Hierbei ist die Mensch-Maschinenschnittstelle beispielsweise durch ein Display und Bedientasten am elektronischen Motorsteuergerät ausgebildet.

Eine Fehlparametrierung des elektronischen Motorsteuergerätes kann hierdurch vermieden werden, da lediglich die erwünschte Kennzahl, nämlich die Anlauf- und/oder Auslaufzeit eines Asynchronmotors, eingegeben werden muss. Durch die Vereinfachung der Parametrierung des Motorsteuergerätes wird für die Parametrierung kein Fachpersonal mehr benötigt. Installationskosten können somit reduziert werden.

In einer weiteren vorteilhaften Ausführungsform der Erfindung ist der Regler dazu ausgebildet, anhand der Anlaufzeitdifferenz und/oder der Auslaufzeitdifferenz einen Stellwert des elektronischen Motorsteuergeräts derart zu setzen, dass der Anlaufzeitsollwert und/oder der Auslaufzeitsollwert erreicht wird, wobei der Stellwert durch eine Startspannung, eine Abschaltspannung, eine Rampenzeit, ein Bremsmoment und/oder eine Strombegrenzung des elektronischen Motorsteuergeräts ausgebildet ist.

Über den Stellwert kann der Regler das Anlauf- und/oder Auslaufverhalten des Asynchronmotors und somit die Anlaufzeit und/oder Auslaufzeit des Asynchronmotors beeinflussen. Insbesondere die Startspannung, die Abschaltspannung, die Rampenzeit, das Bremsmoment und/oder die Strombegrenzung beeinflussen die Anlaufzeit und/oder Auslaufzeit des Asynchronmotors. Der Regler stellt den Stellwert des Motorsteuergerätes derart ein, dass der beispielsweise über die Mensch-Maschinenschnittstelle eingegebene Anlaufzeitsollwert und/oder Auslaufzeitsollwert erreicht wird und stellt den Stellwert, sofern notwendig, anhand der letzten erreichten Anlaufzeit und/oder Auslaufzeit derart nach, dass der erwünschte Anlaufzeitsollwert und/oder Auslaufzeitsollwert erreicht wird. Hierbei sind in dem Regler vorzugsweise über einen geeigneten Algorithmus die einzelnen Beziehungen der Parameter (insbesondere Startspannung, Abschaltspannung, Rampenzeit, Bremsmoments und Strombegrenzung) untereinander und deren Auswirkungen auf das Anlauf- und/oder Auslaufverhalten eines angeschlossenen Asynchronmotors hinterlegt. Insbesondere diese Parameter nehmen Einfluss auf das Anlauf- und/oder Auslaufverhalten eines Asynchronmotors. Hierbei legt beispielsweise die Startspannung fest, bei welcher Spannung der Anlaufvorgang beginnt, die Abschaltspannung legt fest, bei welcher Spannung im Auslauf beendet wird. Die Rampenzeit legt die Steigung einer Spannungsrampe fest. Dieser Wert hat indirekt Einfluss auf die An- und Auslaufzeit eines Asynchronmotors, bestimmt aber nicht alleine die resultierende An- und Auslaufzeit. Die Strombegrenzung legt eine maximale Stromgrenze für den Anlauf fest, die nicht überschritten wird. Ist diese zum Beispiel zu niedrig eingestellt, so kann dies dazu führen, dass ein Antrieb nicht anläuft. Ebenso kann der Antrieb "hängenbleiben", sofern sich beispielsweise die Last im Nachhinein ändert. Weitere Parameter können beispielsweise der Losbrechimpuls und das Bremsmoment sein.

Das elektronische Motorsteuergerät sorgt somit mithilfe des Stellwertes dafür, dass es zu einem ständigen Nachführen der erforderlichen Parameter kommt. Gemäß dem Stand der Technik werden die Parameter von dem Anwender zu Beginn der Installation einmal gesetzt. Kommt es nun zu einer unerwünschten Laständerung des Asynchronmotors, so müsste der Anwender die Parameter von Hand neu anpassen. Ein derartiges Nachjustieren von Hand ist in dieser Ausführungsform nicht mehr notwendig. Stillstandszeiten, sowie Wartungsintervalle können hierdurch vermieden werden und der erwünschte Einsatz des elektronischen Motorsteuergerätes kann sichergestellt werden.

Gemäß der Erfindung stellt die Anlaufzeit eine vom Einschalten des Asynchronmotors bis zum Erreichen einer Nenndrehzahl des Asynchronmotors charakterisierenden Größe dar.

Die Anlaufzeit kann beispielsweise bei elektronischen Motorsteuergeräten, welche eine Stromerfassung in mindestens einer Phase haben, leicht ermittelt werden. Hierbei kann über den Stromverlauf, der sich nach Erreichen der Nenndrehzahl beim Überschreiten des "Kipppunkts" ergibt, eindeutig das Ende der Anlaufphase erkannt werden. Prinzipiell sind auch andere Lösungen zur Ermittlung der Anlaufzeit vorstellbar. Bei Geräten mit Bypasskontakten werden nach der Anlaufphase die Bypasskontakte geschlossen und somit die Thyristoren überbrückt. Dieser Zeitpunkt kann beispielsweise ebenso das Ende einer Anlaufzeit darstellen.

Gemäß der Erfindung stellt die Auslaufzeit eine vor dem Abschalten des Asynchronmotors bis zum Erreichen des Stillstandes des Asynchronmotors charakterisierende Größe dar.

Hierbei sollte vorzugsweise das Ende der Auslaufzeit mit dem Erreichen des Stillstandes des angeschlossenen Asynchronmotors zusammenhängen.

In einer weiteren vorteilhaften Ausführungsform der Erfindung weist das elektronische Motorsteuergerät einen Speicher zum Speichern einer letzten erreichten Anlaufzeit und/oder Auslaufzeit auf.

Die Speicherung erfolgt hierbei vorzugsweise in einem flüchtigen Speicher des Motorsteuergerätes. In einer vorteilhaften Ausgestaltung des Motorsteuergerätes können mit Hilfe des Speichers auch die Werte der letzten Anlaufzeiten und/oder Auslaufzeiten sowie die eingestellten Parameter der jeweiligen Anlaufphasen und/oder Auslaufphasen abgespeichert werden. Dies hat den Vorteil, dass eine Analyse der bereits getätigten Anlaufphasen und/oder Auslaufphasen durchgeführt werden kann. Eine derartige Analyse kann beispielsweise zum Einen vom elektronischen Motorsteuergerät und insbesondere vom Regler selbst erfolgen oder aber auch von einem Anwender, welcher die Daten aus dem Motorsteuergerät ausliest und analysiert.

Im Folgenden werden die Erfindung und Ausgestaltungen der Erfindung anhand der in den Figuren dargestellten Ausführungsbeispiele näher beschrieben und erläutert. Es zeigen:
- FIG 1: Ein elektronisches Motorsteuergerät, welches an einem Asynchronmotor angeschlossen ist,
- FIG 2: das elektronische Motorsteuergerät aus Figur 1 mit einem Speicher, einem Stellwert und einer Mensch-Maschinenschnittstelle, und
- FIG 3: einen Sanftanlauf durch einer Spannungsrampe.

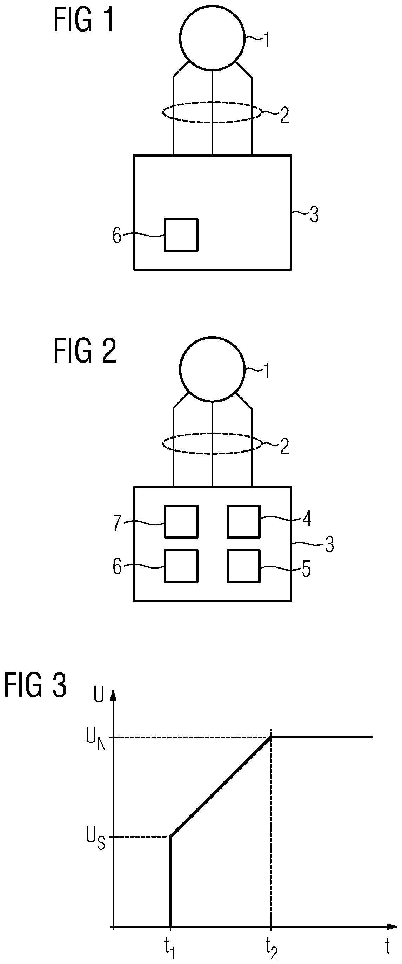

Die FIG 1 zeigt einen Aufbau eines elektronischen Motorsteuergerätes 3, welcher an einem Asynchronmotor 1 angeschlossen ist. Hierbei ist der Asynchronmotor 1 über drei Phasen 2 mit dem elektronischen Motorsteuergerät 3 verbunden. Das elektronische Motorsteuergerät 3 weist einen Regler 6 auf, über den die Anlauf- und/oder Auslaufzeit des Asynchronmotors 1 geregelt wird. Ein fester Anlauf- und/oder Auslaufzeitsollwert wird mit einer letzten erreichten Anlauf- und/oder Auslaufzeit verglichen. Eine Anlaufzeit- und/oder Auslaufzeitdifferenz wird gebildet. Anhand dieser Differenz kann der Regler die ausschlaggebenden Parameter des elektronischen Motorsteuergerätes 3 derart einstellen, dass der erwünschte Anlauf- und/oder Auszeitsollwert erreicht wird. Derartige Parameter sind beispielsweise die Startspannung, die Rampenzeit, das Bremsmoment und die Klemmenspannung. Durch einen ständigen Abgleich mit der letzten erreichten Anlauf- und/oder Auslaufzeit und des erwünschten Anlauf- und/oder Auszeitsollwertes kann das Motorsteuergerät 3 mithilfe des Reglers 6 sich automatisch an die erwünschte Zeit annähern und letztendlich das erwünschten Anlauf- und/oder Auslaufverhalten des Asynchronmotor herstellen. Ein zeitaufwendiges Parametrieren von Hand entfällt. Zudem reagiert das Motorsteuergerät 3 mithilfe des Reglers 6 automatisch auf Laständerungen des Asynchronmotors. Die intelligente Regelung der Parameter hinsichtlich des Anlauf- und/oder Auslaufverhaltens wird automatisch von dem Regler 6 übernommen.

FIG 2 zeigt das elektronische Motorsteuergerät 3 aus Figur 1 mit einem Speicher 7, einem Stellwert 5 und einer Mensch-Maschinenschnittstelle 4. Die Mensch-Maschinenschnittstelle 4 wird beispielsweise durch ein Display und Bedientasten am elektronischen Motorsteuergerät 3 gebildet. Dadurch, dass der Anwender lediglich den Anlauf- und/oder Auslaufzeitsollwert des Asynchronmotors 1 an der Mensch-Maschinenschnittstelle 4 eingeben muss, wird für ihn die Inbetriebnahme des elektronischen Motorsteuergeräts 3 enorm vereinfacht. Ein mühseliges zeitaufwändiges Parametrieren des elektronischen Motorsteuergeräts 3 entfällt. Zum Abspeichern der letzten erreichten Anlauf- und/oder Auslaufzeit weist das elektronische Motorsteuergerät 3 den flüchtigen Speicher 7 auf. Kommt es bei dem Asynchronmotor 1 nun zu Laständerungen oder Änderungen der Umgebungsvariablen (z.B. Temperatur), so kann es zu einer Abweichung zwischen dem über die Mensch-Maschinenschnittstelle 4 eingegebene Anlauf- und/oder Auslaufzeitsollwert und der tatsächlich erreichten Anlauf- und/oder Auslaufzeit des Asynchronmotors 1 kommen. Der im elektronischen Motorsteuergerät 3 integrierter Regler 6 kann auf Basis der Anlaufzeit- und/oder Auslaufzeitdifferenz einen Stellwert 5 bilden und hierüber die Parameter derart regeln, dass der eingegebene Anlaufzeitsollwert und/oder Auslaufzeitsollwert wieder erreicht wird. Die letzte erreichte Anlaufzeit und/oder Auslaufzeit kann der Regler 6 hierbei aus dem Speicher 7 abrufen. Auf diese Weise kann ein zuverlässiger beständiger Betrieb des Asynchronmotors 1 gewährleistet werden, welcher sich auf Änderungen des Lastverhältnisses des Asynchronmotors 1 anpasst. Ständiges manuelles "Nachparametrieren" des elektronischen Motorsteuergerätes 3 wird hierdurch überflüssig. Das elektronische Motorsteuergerät 3 wird bei der Installation einmalig hinsichtlich der erwünschten Anlauf- und/oder Auslaufzeit des Asynchronmotors 1 eingestellt und sorgt im Nachhinein automatisch dafür, dass der eingestellte Anlauf- und/oder Auslaufzeitsollwert des Asynchronmotors 1 gehalten wird.

Im Folgenden wird ein Ausführungsbeispiel für ein elektronisches Motorsteuergerät 3 gegeben, welches sich innerhalb von drei Starts passend auf den Asynchronmotor bzw. auf die Last eingestellt.

### Anlaufphase:

Hierfür werden intern die letzte erreichte Anlaufzeit und der Strom gemessen und ausgewertet. Liegt die erreichte Anlaufzeit unter dem vorgegebenen Anlaufzeitsollwert, so wird der Strom für den nächsten Start verringert. Bei einer letzten erreichten Anlaufzeit, die über dem vorgegebenen Anlaufzeitsollwert liegt, muss der Strom für den nächsten Start erhöht werden.

Der Strom wird bereits während des Anlaufvorgangs erhöht, wenn der vorgegebene Anlaufzeitsollwert überschritten wird, um so den Startvorgang schneller zu beenden. Die Erhöhung erfolgt dann stufenweise in Abständen von 3s. Ist der Anlauf nach 30s nicht beendet, wird der Start abgebrochen, gleichzeitig ein Sammelfehlerausgang gesetzt und anschließend der Asynchronmotor bis zum Stillstand abgebremst. Für den nächsten Start wird der Strom erhöht.

Die Parametrierung wird bei jedem Start erneut überprüft und bei Bedarf optimiert das elektronische Motorsteuergerät 3 die Parameter wieder automatisch nach.

Wird der Start vor vollendetem Anlauf des Motors abgebrochen und war der Anlaufzeitsollwert noch nicht erreicht, wird der alte Strom beibehalten.

Sollte die Last am Asynchronmotor so groß sein, dass mit dem max. Stromwert kein Anlauf innerhalb von 10s erreichbar ist, wird der Strom auf den Maximalwert begrenzt. Der vorgegebene Anlaufzeitsollwert wird auf den daraus resultierenden Wert erhöht. Sollte sich die Anlaufzeit bei einem der folgenden Starts reduzieren, werden auch die Sollwerte entsprechend verringert.

### Bremsvorgang:

Hierbei wird der Auslauf als Bremsvorgang beschrieben. Das elektronische Motorsteuergerät 3 kontrolliert während des Bremsvorgangs/Auslaufvorgangs immer den Bremsstrom und misst die Auslaufzeit. Beim ersten Ausführen einer Bremsung während eines Geräteselbsttests werden die Daten einer Werksgrundeinstellung verwendet.

Während der Bremsvorgänge wird überprüft, ob ein vorgegebener Bremszeitsollwert eingehalten wird. Ein Bremsmoment wird dann entsprechend für den nächsten Vorgang optimiert, unabhängig vom Anlauflernvorgang.

Innerhalb von drei Bremsvorgängen muss sich das Motorsteuergerät auf den Asynchronmotor 1 bzw. auf die Last passend eingestellt haben. Liegt die Bremszeit unter dem eingestellten Bremszeitsollwert wird das Bremsmoment für den nächsten Vorgang verringert. Bei einer Bremszeit, die über dem vorgegebenen Bremszeitsollwert liegt, wird das Bremsmoment für die nächste Bremsung erhöht.

Das Bremsmoment wird bereits während des Bremsvorgangs erhöht, wenn der vorgegebene Bremszeitsollwert überschritten wird, um den Bremsvorgang schneller zu beenden. Die Erhöhung erfolgt dann stufenweise in Abständen von 3s. Ist ein Stillstand nach 30s nicht erreicht, wird das Bremsen abgebrochen und gleichzeitig ein Gerätefehler erzeugt. Für den nächsten Bremsvorgang wird dann das Bremsmoment erhöht. Wird der vorgegebene Bremszeitsollwert 3-mal in Folge überschritten, wird ebenfalls ein Gerätefehler gesetzt. Nach Quittierung dieses Fehlers durch Ausschalten einer Steuerspannung entsteht der Fehler erst dann erneut, wenn der vorgegebene Bremszeitsollwert wieder 3-mal in Folge überschritten wird.

Die Parametrierung wird bei jedem Start erneut überprüft und bei Bedarf optimiert das elektronische Motorsteuergerät 3 das Bremsmoment wieder automatisch nach.

Sollte die Last am Asynchronmotor 1 so groß sein, dass mit dem max. Bremsmoment kein Stillstand innerhalb von 10s erreichbar ist, wird das Bremsmoment auf das max. Bremsmoment begrenzt.

Wird der Start vor vollendetem Hochlauf des Motors abgebrochen und wird beim anschließenden Bremsvorgang der Bremszeitsollwert noch nicht erreicht, wird das alte Bremsmoment beibehalten.

FIG 3 zeigt einen Sanftanlauf eines Asynchronmotors 1 mit einer Spannungsrampe. Möchte nun ein Anwender eine Anlaufzeit A für seinen Asynchronmotor 1 einstellen, so muss dieser lediglich mithilfe eines Displays über die Bedientasten den Wert A für die Anlaufzeit am elektronischen Motorsteuergerät 3 einstellen. Das elektronische Motorsteuergerät 3, setzt hierauf Parameter, wie beispielsweise Startspannung, Rampenzeit, Bremsmoment und Klemmenspannung derart, dass der vom Anwender eingegeben Anlaufzeitsollwert erreicht wird. Hierfür weist das elektronische Motorsteuergerät 3 eine Verarbeitungseinheit auf. Dieser Verarbeitungseinheit sind die Zusammenhänge der einzelnen Parameter untereinander sowie hinsichtlich der Kenndaten der Asynchronmotoren hinterlegt, so dass das Steuermittel 5 anhand der eingegebenen Anlauf- und/oder Auslaufzeitsollwerte und der Kenngröße des Asynchronmotors 1 die Parameter derart setzen kann, dass die eingegeben Anlauf- und/oder Auslaufzeitsollwerte erreicht wird.

Im Fall eines spannungsgeführten An- und Auslaufs wird beispielsweise nur die Höhe der Spannung verändert. Die Frequenz ist konstant und entspricht der Netzfrequenz im Gegensatz zu einer frequenzgeführten An- und Auslaufzeit eines Umrichters. Bei einem spannungsgeführten Anlauf kann das Motorsteuergerät auf einfache Art beispielsweise durch eine Spannungsrampe einen Sanftanlauf des Asynchronmotors 1 erreichen. In der eingestellten Rampenzeit (t₂ - t₁) wird hierfür die Klemmenspannung am Asynchronmotor erhöht. Hierbei wird die Spannung des Asynchronmotors ab einer Startspannung U_{S} zum Zeitpunkt t₁ bis zum Erreichen des Zeitpunktes t₂ auf die Netzspannung U_{N} erhöht. Die erwünschte Anlaufzeit entspricht hierbei die Rampenzeit t. Das elektronische Motorsteuergerät setzt nach Eingabe des erwünschten Anlaufzeitsollwertes automatisch die Parameter, in diesem Fall den Wert U_{S} derart, dass die Rampenzeit und somit der erwünschten Anlaufzeitsollwert erreicht wird. Liegt dieser nach dem ersten Anlauf nicht vor, so wird mittels des Reglers das elektronische Motorsteuergerät derart nachgeregelt, dass der erwünschte Anlaufzeitsollwert erreicht wird.

## Patentansprüche

1. Elektronisches Motorsteuergerät (3) zur Ansteuerung eines Asynchronmotors (1), wobei das elektronische Motorsteuergerät (3) über drei Phasen (2) mit dem Asynchronmotor (1) verbindbar ist, **dadurch gekennzeichnet, dass** das elektronische Motorsteuergerät (3) dazu ausgebildet ist, den Asynchronmotor (1) mithilfe einer Phasenanschnittssteuerung anzusteuern, wobei in dem elektronischen Motorsteuergerät (3) ein Anlaufzeitsollwert einer Anlaufzeit und/oder ein Auslaufzeitsollwert einer Auslaufzeit des Asynchronmotors (1) hinterlegt ist, wobei das elektronische Motorsteuergerät (3) einen Regler (6) zum Regeln der Anlaufzeit auf Basis einer Anlaufzeitdifferenz einer letzten erreichten Anlaufzeit zu dem Anlaufzeitsollwert und/oder zum Regeln der Auslaufzeit auf Basis einer Auslaufzeitdifferenz einer letzten erreichten Auslaufzeit zu dem Auslaufzeitsollwert aufweist, wobei die Anlaufzeit eine vom Einschalten des Asynchronmotors (1) bis zum Erreichen einer Nenndrehzahl des Asynchronmotors (1) charakterisierende Größe darstellt und wobei die Auslaufzeit eine vom Abschalten des Asynchronmotors (1) bis zum Erreichen des Stillstandes des Asynchronmotors (1) charakterisierende Größe darstellt.

2. Elektronisches Motorsteuergerät (3) nach Anspruch 1, wobei das elektronische Motorsteuergerät (3) eine Mensch-Maschinenschnittstelle (4) zur direkten Eingabe des Anlaufzeitsollwerts und/oder des Auslaufzeitsollwertes am elektronischen Motorsteuergerät (3) aufweist.

3. Elektronisches Motorsteuergerät (3) nach einem der vorhergehenden Ansprüche, wobei der Regler (6) dazu ausgebildet ist, anhand der Anlaufzeitdifferenz und/oder der Auslaufzeitdifferenz einen Stellwert (5) des elektronischen Motorsteuergeräts (3) derart zu setzen, dass der Anlaufzeitsollwert und/oder der Auslaufzeitsollwert erreicht wird, wobei der Stellwert (5) durch eine Startspannung, eine Abschaltspannung, eine Rampenzeit, ein Bremsmoment und/oder eine Strombegrenzung des elektronischen Motorsteuergeräts (3) ausgebildet ist.

4. Elektronisches Motorsteuergerät (3) nach einem der vorhergehenden Ansprüche, wobei das elektronische Motorsteuergerät (3) einen Speicher (7) zum Speichern der letzten erreichten Anlaufzeit und/oder Auslaufzeit aufweist.

5. Verfahren zum Ansteuern eines Asynchronmotors (1) mit einem elektronischen Motorsteuergerät (3), wobei der Asynchronmotor (1) über drei Phasen (2) mit dem elektronischen Motorsteuergerät (3) verbunden ist, **dadurch gekennzeichnet, dass** das elektronische Motorsteuergerät (3) den Asynchronmotor (1) mithilfe einer Phasenanschnittssteuerung ansteuert, mit folgenden Verfahrensschritten:
- Einlesen einer letzten erreichten Anlaufzeit und/oder einer letzten erreichten Auslaufzeit des Asynchronmotors (1), wobei die Anlaufzeit eine vom Einschalten des Asynchronmotors (1) bis zum Erreichen einer Nenndrehzahl des Asynchronmotors (1) charakterisierende Größe darstellt und wobei die Auslaufzeit eine vom Abschalten des Asynchronmotors (1) bis zum Erreichen des Stillstandes des Asynchronmotors (1) charakterisierende Größe darstellt,
- Automatisches Regeln einer Anlaufzeit auf Basis einer Anlaufzeitdifferenz der letzten erreichten Anlaufzeit zu einem Anlaufzeitsollwert des Asynchronmotors (1) und/oder einer Auslaufzeit auf Basis einer Auslaufzeitdifferenz der letzten erreichten Auslaufzeit zu einem Auslaufzeitsollwert des Asynchronmotors (1) mittels eines Reglers (6) des elektronischen Motorsteuergeräts (3).

6. Verfahren zum Ansteuern eines Asynchronmotors (1) nach Anspruch 5, wobei die letzte erreichte Anlaufzeit und/oder Auslaufzeit in einem Speicher (7) gespeichert wird.

7. Verfahren zum Ansteuern eines Asynchronmotors (1) nach einem der Ansprüche 5 bis 6, wobei anhand der Anlaufzeitdifferenz und/oder der Auslaufzeitdifferenz ein Stellwert (5) eines elektronischen Motorsteuergeräts (3) derart gesetzt wird, dass der Anlaufzeitsollwert und/oder der Auslaufzeitsollwert erreicht wird.

8. Computerprogrammprodukt enthaltend Programmcodemittel, das Computerprogrammprodukt ist so angepasst, dass es ein Verfahren nach einem der Ansprüche 5 bis 7 ausführt, wobei besagtes Computerprogrammprodukt auf einem Datenverarbeitungssystem ausgeführt wird.

## Claims

1. Electronic motor control device (3) for actuating an asynchronous motor (1), wherein the electronic motor control device (3) can be connected to the asynchronous motor (1) over three phases (2), **characterised in that** the electronic motor control device (3) is embodied to actuate the asynchronous motor (1) with the aid of a phase angle control, wherein a start-up time setpoint value of a start-up time and/or a run-down time setpoint value of a run-down time of the asynchronous motor (1) is stored in the electronic motor control device (3), wherein the electronic motor control device (3) has a regulator (6) for regulating the start-up time on the basis of a start-up time difference between a last achieved start-up time and the start-up time setpoint value and/or for regulating the run-down time on the basis of a run-down time difference between a last achieved run-down time and the run-down time setpoint value, wherein the start-up time represents a variable which characterises from the switching-on of the asynchronous motor (1) until a rated rotational speed of the asynchronous motor (1) is achieved and wherein the run-down time represents a variable which characterises from the switching-off of the asynchronous motor (1) until the standstill of the asynchronous motor (1) is achieved.

2. Electronic motor control device (3) according to claim 1, wherein the electronic motor control device (3) has a human-machine interface (4) for direct input of the start-up time setpoint value and/or the run-down time setpoint value at the electronic motor control device (3).

3. Electronic motor control device (3) according to one of the preceding claims, wherein the regulator (6) is embodied to set a control value (5) of the electronic motor control device (3) on the basis of the start-up time difference and/or the run-down time difference such that the start-up time setpoint value and/or the run-down time setpoint value is/are achieved, wherein the control value (5) is embodied by a start voltage, a switch-off voltage, a ramp time, a brake torque and/or a current limitation of the electronic motor control device (3).

4. Electronic motor control device (3) according to one of the preceding claims, wherein the electronic motor control device (3) has a memory (7) for saving the last achieved start-up time and/or run-down time.

5. Method for actuating an asynchronous motor (1) with an electronic motor control device (3), wherein the asynchronous motor (1) is connected to the electronic motor control device (3) over three phases (2), **characterised in that** the electronic motor control device (3) actuates the asynchronous motor (1) with the aid of a phase angle control, with the following method steps:
- reading in a last achieved start-up time and/or a last achieved run-down time of the asynchronous motor (1), wherein the start-up time represents a variable which characterises from the switching-on of the asynchronous motor (1) until a rated rotational speed of the asynchronous motor (1) is achieved and wherein the run-down time represents a variable which characterises from the switching-off of the asynchronous motor (1) until the standstill of the asynchronous motor (1) is achieved,
- automatically regulating a start-up time on the basis of a start-up time difference between the last achieved start-up time and a start-up time setpoint value of the asynchronous motor (1) and/or a run-down time on the basis of a run-down time difference between the last achieved run-down time and a run-down time setpoint value of the asynchronous motor (1) by means of a regulator (6) of the electronic motor control device (3).

6. Method for actuating an asynchronous motor (1) according to claim 5, wherein the last achieved start-up time and/or run-down time is stored in a memory (7).

7. Method for actuating an asynchronous motor (1) according to one of claims 5 to 6, wherein a control value (5) of an electronic motor control device (3) is set on the basis of the start-up time difference and/or the run-down time difference, such that the start-up time setpoint value and/or the run-down time setpoint value is/are achieved.

8. Computer program product containing program code means, which computer program product is adapted such that it executes a method according to one of claims 5 to 7, wherein said computer program product is executed on a data processing system.

## Revendications

1. Appareil (3) électronique de commande de moteur pour commander un moteur (1) asynchrone, l'appareil (3) électronique de commande de moteur pouvant être relié au moteur (1) asynchrone par trois phases (2), **caractérisé en ce que** l'appareil (3) électronique de commande de moteur est constitué pour commander le moteur (1) asynchrone à l'aide d'un réglage de phase, dans lequel, dans l'appareil (3) électronique de commande de moteur, est mémorisée une valeur de consigne d'un temps de démarrage et/ou une valeur de consigne d'un temps de décélération du moteur (1) asynchrone, l'appareil (3) électronique de commande de moteur ayant un régleur (6) pour régler le temps de démarrage sur la base d'une différence de temps de démarrage entre un temps de démarrage atteint en dernier et la valeur de consigne de temps de démarrage et/ou pour régler le temps de décélération sur la base d'une différence de temps de décélération entre un temps de décélération atteint en dernier et la valeur de consigne de temps de décélération, le temps de démarrage représentant une grandeur caractéristique de la mise en circuit du moteur (1) asynchrone jusqu'à l'atteinte d'une vitesse de rotation nominale du moteur (1) asynchrone et le temps de décélération représentant une grandeur caractéristique de la mise hors circuit du moteur (1) asynchrone jusqu'à ce qu'une vitesse de rotation nominale du moteur (1) asynchrone soit atteinte et le temps de décélération représentant une grandeur caractéristique de la mise hors circuit du moteur (1) asynchrone jusqu'à ce que l'arrêt du moteur (1) asynchrone soit atteint.

2. Appareil (3) électronique de commande de moteur suivant la revendication 1, dans lequel l'appareil (3) électronique de commande de moteur a une interface (4) homme-machine pour l'entrée directe de la valeur de consigne du temps de démarrage et/ou de la valeur de consigne du temps de décélération dans l'appareil (3) électronique de commande de moteur.

3. Appareil (3) électronique de commande de moteur suivant l'une des revendications précédentes, dans lequel le régleur (6) est constitué pour régler, à l'aide de la différence de temps de démarrage et/ou de la différence de temps de décélération, une valeur (5) de réglage de l'appareil (3) électronique de commande de moteur, de manière à atteindre la valeur de consigne de temps de démarrage et/ou la valeur de consigne de temps de décélération, la valeur (5) de réglage étant constituée par une tension de démarrage, une tension de mise hors circuit, un temps de rampe, un couple et/ou une limitation de courant de l'appareil (3) électronique de commande de moteur.

4. Appareil (3) électronique de commande de moteur suivant l'une des revendications précédentes, dans lequel l'appareil (3) électronique de commande de moteur a une mémoire (7) pour mémoriser le temps de démarrage et/ou le temps de décélération atteint en dernier.

5. Procédé de commande d'un moteur (1) asynchrone par un appareil (3) électronique de commande de moteur, le moteur (1) asynchrone étant connecté à l'appareil (3) électronique de commande de moteur par trois phases (2), **caractérisé en ce que** l'appareil (3) électronique de commande de moteur commande le moteur (1) asynchrone à l'aide d'un réglage de phase comprenant les stades de procédé suivants :
- lecture d'un temps de démarrage atteint en dernier et/ou d'un temps de décélération atteint en dernier du moteur (1) asynchrone, le temps de démarrage représentant une grandeur caractéristique de la mise en circuit du moteur (1) asynchrone jusqu'à ce qu'une vitesse de rotation nominale du moteur (1) asynchrone soit atteinte et le temps de décélération représentant une grandeur caractéristique de la mise hors circuit du moteur (1) asynchrone jusqu'à ce que l'arrêt du moteur (1) asynchrone soit atteint,
- réglage automatique d'un temps de démarrage sur la base d'une différence de temps de démarrage entre le temps de démarrage atteint en dernier et une valeur de consigne de temps de démarrage du moteur (1) asynchrone et/ou d'un temps de décélération sur la base d'une différence de temps de décélération entre le temps de décélération atteint en dernier et une valeur de consigne de temps de décélération du moteur (1) asynchrone au moyen d'un régleur (6) de l'appareil (3) électronique de commande de moteur.

6. Procédé de commande de moteur (1) asynchrone suivant la revendication 5, dans lequel on mémorise dans une mémoire (7 ) le temps de démarrage et/ou le temps de décélération atteint en dernier.

7. Procédé de commande de moteur (1) asynchrone suivant l'une des revendications 5 à 6, dans lequel, à l'aide de la différence de temps de démarrage et/ou de la différence de temps de décélération, on fixe une valeur (5) de réglage d'un appareil (3) électronique de commande de moteur, de manière à atteindre la valeur de consigne de temps de démarrage et/ou la valeur de consigne de temps de décélération.

8. Produit de programme d'ordinateur contenant des moyens de code de programme, le produit de programme d'ordinateur étant adapté de manière à exécuter un procédé suivant l'une des revendications 5 à 7, ledit produit de programme d'ordinateur étant réalisé sur un système de traitement de données.
